# EUROPEAN PATENT SPECIFICATION

(11) **EP 4 021 021 B1**
(45) Date of publication and mention of the grant of the patent: **14.10.2026**
(21) Application number: 21216452.9
(22) Date of filing: 21.12.2021
(51) Int. Cl.: H04W 4/021, H04L 67/52, G01S 5/02, G01S 19/03, G01S 19/25, G01S 5/00

(54) **METHOD AND APPARATUS TO ENABLE SELECTIVE POSITIONING REQUESTS BASED UPON THE AVAILABILITY OF RADIO MODELS**
VERFAHREN UND VORRICHTUNG ZUM ERMÖGLICHEN VON SELEKTIVEN POSITIONIERUNGSANFRAGEN BASIEREND AUF DER VERFÜGBARKEIT VON FUNKMODELLEN
PROCÉDÉ ET APPAREIL PERMETTANT DES REQUÊTES DE POSITIONNEMENT SÉLECTIF BASÉES SUR LA DISPONIBILITÉ DE MODÈLES RADIO

(30) Priority: 22.12.2020 US 202017130939
(43) Date of publication of application: 29.06.2022
(73) Proprietor: HERE Global B.V., 5611 ZT Eindhoven (NL)
(72) Inventor: IVANOV, Pavel, 33100 Tampere (FI); LUOMI, Marko, 33880 Lempäälä (FI); NURMINEN, Henri Jaakko Julius, 33100 Tampere (FI); PENTIKÄINEN, Pasi, 33200 Tampere (FI)
(74) Representative: Sariot, Eray

(56) References cited:
- WO-A1-2011/110899
- WO-A1-2012/118853
- WO-A1-2013/009465
- US-A1- 2010 291 947
- US-A1- 2012 028 649

## Description

### TECHNOLOGICAL FIELD

An example embodiment relates generally to a method, apparatus and computer program product for enabling selective positioning requests and, more particularly, to a method, apparatus and computer program product for enabling selective positioning requests based upon the availability of one or more radio models.

### BACKGROUND

The determination of the location of a mobile device for many purposes and is necessary for proper execution of a number of applications, such as navigation and mapping applications. In order to determine the location of a mobile device, the mobile device may receive radio signals from any of a variety of different type of access points, such as by receiving cellular radio signals from cellular base stations, receiving Wi-Fi or Bluetooth signals from respective access points or the like. Based upon the radio signals that are received, the location of the mobile device may be determined utilizing various positioning technologies. For example, radio models that define the radio signals to be received from respective access points at different locations may be utilized in order to determine the location of the mobile device, such as by comparing the radio signals actually received by the mobile device to the radio signals that are anticipated to be received at different locations as defined by the radio models.

The radio models may be downloaded and stored by the mobile device such that the mobile device is capable of determining its location without communication with a server or other network device. However, the radio models are typically relatively large data structures and, as such, the downloading of the radio models may require the dedication of substantial memory by the mobile device to store the radio models and may consume substantial bandwidth to both download the radio models and to repeatedly update the radio models thereafter.

As such, some mobile devices utilize on-line positioning services in which the radio models are maintained by a server or other network device. In conjunction with on-line positioning services, the mobile device may provide a server or other network device with information regarding the radio signals that have been captured by the mobile device. The server or other network device can then estimate the location of the mobile device based upon a comparison of the radio signals received by the mobile device and the radio signals defined by the radio models that are maintained by the server or other network device to be received at different locations. The server or other network device may then provide information regarding the estimated location to the mobile device, such as for utilization by various applications executed by the mobile device.

However, the server or other network device may not always include or have access to the radio models necessary to determine the location of the mobile device, at least not with the precision that is desired. For example, radio models must be constructed, such as by the collection and analysis of a substantial quantity of probe data that defines the radio signals received by mobile devices at different locations. Additionally, radio models may become outdated over the course of time and/or as the radio environment changes, such as due to the addition, removal or movement of access points. Thus, the radio models representative of a radio environment must be updated at different points in time in order to support the determination of the location of a mobile device with sufficient confidence. During the construction and/or updating of the radio models, however, the server or other network device may not have access to radio models sufficient to determine the location of the mobile device.

In these instances, the request by a mobile device for the determination of its location and the provision of information regarding the radio signals captured by the mobile device in conjunction with the request may unnecessarily consume bandwidth and may cause the server or other network device to correspondingly consume processing resources unnecessarily in an effort to determine the location of the mobile device in an instance in which the server or other network device does not have sufficient information or sufficiently up-to-date information from which to make such a determination. Thus, the location of the mobile device may not be able to be determined, notwithstanding the consumption of bandwidth and processing resources. US2012028649 discloses a method for use in determining that a mobile station is at an indoor location. WO2013009465 discloses a position estimation for a mobile device. In US2010291947 a facility for selecting a mobile device location determination technique is described.

### BRIEF SUMMARY

A method, apparatus and computer program product are provided in accordance with an example embodiment in order to efficiently determine the location of a mobile device based upon radio signals received by the mobile device. In this regard, the method, apparatus and computer program product of an example embodiment determine whether radio models exist to permit the location of the mobile device to be determined prior to consuming the bandwidth required to provide the server or other network device with information regarding the radio signals received by the mobile device from which the location of the mobile device may be determined. Additionally, the method, apparatus and computer program product of an example embodiment determine whether radio models are available from which the location of the mobile device may be determined prior to causing the server or other network device to consume the processing resource required in an effort to determine the location of a mobile device based upon radio signals received by the mobile device. Thus, the method, apparatus and computer program product of an example embodiment avoid the consumption of network and processing resources in an instance in which the location of the mobile device will not be able to be determined based upon reliance on radio models, such as an instance in which the radio models are being constructed and/or updated. If the radio models are available, however, the method, apparatus and computer program product are configured to determine the location of the mobile device based thereupon.

In an example embodiment, a method is provided for enabling selective positioning requests. The method includes receiving location information relating to a mobile device. The method also includes determining, by processing circuitry, availability of one or more radio models in relation to a location estimate for the mobile device based upon the location information. The method further includes providing information to the mobile device regarding the availability of the one or more radio models in relation to the location estimate.

The location information may be a coarse location estimate for the mobile device. In an example embodiment, the location information includes location information provided by a positioning system or a cellular system. The method of an example embodiment determines the availability of one or more radio models in relation to the location estimate for the mobile device by determining the one or more radio models in proximity to the location estimate for the mobile device. In this example embodiment, the method provides information regarding the availability of the one or more radio models by providing identification information for the one or more radio models in proximity to the location estimate for the mobile device.

The method of another example embodiment determines the availability of one or more radio models in relation to the location estimate for the mobile device by determining a number of radio models in proximity to the location estimate for the mobile device. In this example embodiment, the method provides information regarding the availability of the one or more radio models by providing an indication of the number of radio models in proximity to the location estimate for the mobile device. In a further example embodiment, the method determines whether a positioning request is able to be successfully made based upon the availability of one or more radio models in relation to the location estimate for the mobile device. The method of this example embodiment provides information regarding the availability of the one or more radio models by providing an indication as to whether the positioning request is able to be successfully made.

In another example embodiment, an apparatus is provided that is configured to enable selective positioning requests. The apparatus includes processing circuitry and at least one memory including computer program code instructions with the computer program code instructions configured to, when executed by the processing circuity, cause the apparatus to receive location information relating to a mobile device. The program code instructions are also configured to, when executed by the processing circuity, cause the apparatus to determine availability of one or more radio models in relation to a location estimate for the mobile device based upon the location information and to provide information to the mobile device regarding the availability of the one or more radio models in relation to the location estimate.

The location information may be a coarse location estimate for the mobile device. In an example embodiment, the location information includes location information provided by a positioning system or a cellular system. The computer program code instructions are configured to, when executed by the processing circuity, cause the apparatus of an example embodiment to determine the availability of one or more radio models in relation to the location estimate for the mobile device by determining the one or more radio models in proximity to the location estimate for the mobile device. In this example embodiment, the computer program code instructions are configured to, when executed by the processing circuity, cause the apparatus to provide information regarding the availability of the one or more radio models by providing identification information for the one or more radio models in proximity to the location estimate for the mobile device.

The computer program code instructions are configured to, when executed by the processing circuity, cause the apparatus of an example embodiment to determine the availability of one or more radio models in relation to the location estimate for the mobile device by determining a number of radio models in proximity to the location estimate for the mobile device. In this example embodiment, the computer program code instructions are configured to, when executed by the processing circuity, cause the apparatus to provide information regarding the availability of the one or more radio models by providing an indication of the number of radio models in proximity to the location estimate for the mobile device. In another example embodiment, the computer program code instructions are further configured to, when executed by the processing circuity, cause the apparatus to determine whether a positioning request is able to be successfully made based upon the availability of one or more radio models in relation to the location estimate for the mobile device. In this example embodiment, the computer program code instructions are configured to, when executed by the processing circuity, cause the apparatus to provide information regarding the availability of the one or more radio models by providing an indication as to whether the positioning request is able to be successfully made.

In a further example embodiment, a computer program product is provided for enabling selective positioning requests. The computer program product includes a non-transitory computer readable medium having program code stored thereon with the program code including program code instructions configured, upon execution, to receive location information relating to a mobile device. The program code also includes program code instructions configured to determine availability of one or more radio models in relation to a location estimate for the mobile device based upon the location information. The program code further includes program code instructions configured to provide information to the mobile device regarding the availability of the one or more radio models in relation to the location estimate.

The location information may be a coarse location estimate for the mobile device. In an example embodiment, the location information includes location information provided by a positioning system or a cellular system. In an example embodiment, the program code instructions configured to determine the availability of one or more radio models in relation to the location estimate for the mobile device include program code instructions configured to determine the one or more radio models in proximity to the location estimate for the mobile device. In this example embodiment, the program code instructions configured to provide information regarding the availability of the one or more radio models include program code instructions configured to provide identification information for the one or more radio models in proximity to the location estimate for the mobile device.

The program code instructions configured to determine the availability of one or more radio models in relation to the location estimate for the mobile device include, in one example embodiment, program code instructions configured to determine a number of radio models in proximity to the location estimate for the mobile device. In this example embodiment, the program code instructions configured to provide information regarding the availability of the one or more radio models include program code instructions configured to provide an indication of the number of radio models in proximity to the location estimate for the mobile device. In a further example embodiment, the program code instructions configured to determine whether a positioning request is able to be successfully made based upon the availability of one or more radio models in relation to the location estimate for the mobile device. In this example embodiment, the program code instructions configured to provide information regarding the availability of the one or more radio models include program code instructions configured to provide an indication as to whether the positioning request is able to be successfully made.

In yet another example embodiment, an apparatus is provided for enabling selective positioning requests. The apparatus includes means for receiving location information relating to a mobile device. The apparatus also includes means for determining availability of one or more radio models in relation to a location estimate for the mobile device based upon the location information. The apparatus further includes means for providing information to the mobile device regarding the availability of the one or more radio models in relation to the location estimate.

The location information may be a coarse location estimate for the mobile device. In an example embodiment, the location information includes location information provided by a positioning system or a cellular system. In an example embodiment, the means for determining the availability of one or more radio models in relation to the location estimate for the mobile device includes means for determining the one or more radio models in proximity to the location estimate for the mobile device. In this example embodiment, the means for providing information regarding the availability of the one or more radio models includes means for providing identification information for the one or more radio models in proximity to the location estimate for the mobile device.

The means of another example embodiment for determining the availability of one or more radio models in relation to the location estimate for the mobile device includes means for determining a number of radio models in proximity to the location estimate for the mobile device. In this example embodiment, the means for providing information regarding the availability of the one or more radio models includes means for providing an indication of the number of radio models in proximity to the location estimate for the mobile device. In a further example embodiment, the means for determining whether a positioning request is able to be successfully made bases such a determination upon the availability of one or more radio models in relation to the location estimate for the mobile device. In this example embodiment, the means for providing information regarding the availability of the one or more radio models includes means for providing an indication as to whether the positioning request is able to be successfully made.

In an example embodiment, a method is provided for selective provision of positioning requests. The method includes providing location information relating to a mobile device. The method also includes receiving information regarding an availability of one or more radio models in relation to a location estimate for the mobile device based upon the location information. The method further includes determining, by processing circuitry, whether a positioning request is to be made based upon the information regarding the availability of the one or more radio models.

In an instance in which a determination is made that the positioning request is to be made, the method of an example embodiment also includes providing the positioning request including information regarding measurements of radio signals from one or more access points. However, in an instance in which a determination is made that the positioning request is not to be made, the method of an example embodiment also includes withholding or preventing transmission of the positioning request. In an example embodiment, the method receives information regarding the availability of the one or more radio models by receiving identification information for the one or more radio models that are available as a result of being in proximity to the location estimate for the mobile device. In this example embodiment, the method determines whether the positioning request is to be made by determining whether the positioning request is to be made based upon the one or more access points from which radio signals are received in relation to the one or more radio models for which identification information is received.

The method of an example embodiment receives information regarding the availability of the one or more radio models by receiving an indication of a number of radio models in proximity to the location estimate for the mobile device. In this example embodiment, the method determines whether the positioning request is to be made by determining whether the number of radio models satisfies a predefined threshold. In another example embodiment, the method receives information regarding the availability of the one or more radio models by receiving an indication as to whether the positioning request is able to be successfully made. In this example embodiment, the method determines whether the positioning request is to be made by determining whether the positioning request is to be made based upon the indication as to whether the positioning request is able to be successfully made.

In an instance in which a determination is made that the positioning request is not to be made, the method of an example embodiment also includes determining whether a change has occurred that is capable of altering the determination as to whether the positioning request is to be made. In an instance in which the change has occurred that is capable of altering the determination as to whether the positioning request is to be made, the method of this example embodiment includes again providing location information relating to the mobile device.

In another example embodiment, an apparatus is provided that is configured to selectively provide positioning requests. The apparatus includes processing circuitry and at least one memory including computer program code instructions with the computer program code instructions configured to, when executed by the processing circuity, cause the apparatus to provide location information relating to a mobile device. The computer program code instructions are also configured to, when executed by the processing circuity, cause the apparatus to receive information regarding an availability of one or more radio models in relation to a location estimate for the mobile device based upon the location information. The computer program code instructions are further configured to, when executed by the processing circuity, cause the apparatus to determine whether a positioning request is to be made based upon the information regarding the availability of the one or more radio models.

In an instance in which a determination is made that the positioning request is to be made, the computer program code instructions are further configured to, when executed by the processing circuity, cause the apparatus to provide the positioning request including information regarding measurements of radio signals from one or more access points. However, in an instance in which a determination is made that the positioning request is not to be made, the computer program code instructions of an example embodiment are further configured to, when executed by the processing circuity, cause the apparatus to withhold or prevent transmission of the positioning request.

The computer program code instructions configured to receive information regarding the availability of the one or more radio models include, in an example embodiment, computer program code instructions configured to receive identification information for the one or more radio models that are available as a result of being in proximity to the location estimate for the mobile device. In this example embodiment, the computer program code instructions configured to determine whether the positioning request is to be made include computer program code instructions configured to determine whether the positioning request is to be made based upon the one or more access points from which radio signals are received in relation to the one or more radio models for which identification information is received.

The computer program code instructions configured to receive information regarding the availability of the one or more radio models include, in one example embodiment, computer program code instructions configured to receive an indication of a number of radio models in proximity to the location estimate for the mobile device. In this example embodiment, the computer program code instructions configured to determine whether the positioning request is to be made include computer program code instructions configured to determine whether the number of radio models satisfies a predefined threshold. In another example embodiment, the computer program code instructions configured to receive information regarding the availability of the one or more radio models include computer program code instructions configured to receive an indication as to whether the positioning request is able to be successfully made. In this example embodiment, the computer program code instructions configured to determine whether the positioning request is to be made include computer program code instructions configured to determine whether the positioning request is to be made based upon the indication as to whether the positioning request is able to be successfully made.

In an instance in which a determination is made that the positioning request is not to be made, the computer program code instructions of an example embodiment are further configured to determine whether a change has occurred that is capable of altering the determination as to whether the positioning request is to be made. In an instance in which the change has occurred that is capable of altering the determination as to whether the positioning request is to be made, the computer program code instructions of this example embodiment are configured to again provide location information relating to the mobile device.

In a further example embodiment, a computer program product is provided for selective provision of positioning requests. The computer program product includes a non-transitory computer readable medium having program code stored thereon with the program code including program code instructions configured, upon execution, to provide location information relating to a mobile device. The program code also includes program code instructions configured, upon execution, to receive information regarding an availability of one or more radio models in relation to a location estimate for the mobile device based upon the location information. The program code further includes program code instructions configured, upon execution, to determine whether a positioning request is to be made based upon the information regarding the availability of the one or more radio models.

In an instance in which a determination is made that the positioning request is to be made, the program code of an example embodiment also includes program code instructions configured to provide the positioning request including information regarding measurements of radio signals from one or more access points. However, in an instance in which a determination is made that the positioning request is not to be made, the program code of an example embodiment also includes program code instructions configured to withhold or prevent transmission of the positioning request. In an example embodiment, the program code instructions configured to receive information regarding the availability of the one or more radio models include program code instructions configured to receive identification information for the one or more radio models that are available as a result of being in proximity to the location estimate for the mobile device. In this example embodiment, the program code instructions configured to determine whether the positioning request is to be made include program code instructions configured to determine whether the positioning request is to be made based upon the one or more access points from which radio signals are received in relation to the one or more radio models for which identification information is received.

The program code instructions configured to receive information regarding the availability of the one or more radio models include program code instructions configured, in one embodiment, to receive an indication of a number of radio models in proximity to the location estimate for the mobile device. In this example embodiment, the program code instructions configured to determine whether the positioning request is to be made include program code instructions configured to determine whether the number of radio models satisfies a predefined threshold. In another example embodiment, the program code instructions configured to receive information regarding the availability of the one or more radio models include program code instructions configured to receive an indication as to whether the positioning request is able to be successfully made. In this example embodiment, the program code instructions configured to determine whether the positioning request is to be made include program code instructions configured to determine whether the positioning request is to be made based upon the indication as to whether the positioning request is able to be successfully made.

In an instance in which a determination is made that the positioning request is not to be made, the program code of an example embodiment also includes program code instructions configured to determine whether a change has occurred that is capable of altering the determination as to whether the positioning request is to be made. In an instance in which the change has occurred that is capable of altering the determination as to whether the positioning request is to be made, the program code of this example embodiment also includes program code instructions configured to again provide location information relating to the mobile device.

In yet another example embodiment, an apparatus is provided for selective provision of positioning requests. The apparatus includes means for providing location information relating to a mobile device. The apparatus also includes means for receiving information regarding an availability of one or more radio models in relation to a location estimate for the mobile device based upon the location information. The apparatus further includes means for determining whether a positioning request is to be made based upon the information regarding the availability of the one or more radio models.

In an instance in which a determination is made that the positioning request is to be made, the apparatus of an example embodiment also includes means for providing the positioning request including information regarding measurements of radio signals from one or more access points. However, in an instance in which a determination is made that the positioning request is not to be made, the apparatus of an example embodiment also includes means for withholding or preventing transmission of the positioning request. In an example embodiment, the means for receiving information regarding the availability of the one or more radio models includes means for receiving identification information for the one or more radio models that are available as a result of being in proximity to the location estimate for the mobile device. In this example embodiment, the means for determining whether the positioning request is to be made includes means for determining whether the positioning request is to be made based upon the one or more access points from which radio signals are received in relation to the one or more radio models for which identification information is received.

The means for receiving information regarding the availability of the one or more radio models includes, in one example embodiment, means for receiving an indication of a number of radio models in proximity to the location estimate for the mobile device. In this example embodiment, the means for determining whether the positioning request is to be made includes means for determining whether the number of radio models satisfies a predefined threshold. In another example embodiment, the means for receiving information regarding the availability of the one or more radio models includes means for receiving an indication as to whether the positioning request is able to be successfully made. In this example embodiment, the means for determining whether the positioning request is to be made includes means for determining whether the positioning request is to be made based upon the indication as to whether the positioning request is able to be successfully made.

In an instance in which a determination is made that the positioning request is not to be made, the apparatus of an example embodiment also includes means for determining whether a change has occurred that is capable of altering the determination as to whether the positioning request is to be made. In an instance in which the change has occurred that is capable of altering the determination as to whether the positioning request is to be made, the apparatus of this example embodiment includes means for again providing location information relating to the mobile device.

### BRIEF DESCRIPTION OF THE DRAWINGS

Having thus described example embodiments of the present disclosure in general terms, reference will now be made to the accompanying drawings, which are not necessarily drawn to scale, and wherein:
Figure 1 represents the service areas for which radio models have been constructed for a plurality of access points and illustrates mobile devices positioned at different locations; and configured to receive radio signals from different combinations of access points;
Figure 2 is a block diagram of an apparatus that may be specifically configured in accordance with an example embodiment;
Figure 3 is a flow chart illustrating the operations performed, such as by the apparatus of Figure 2 embodied by or in conjunction with a mobile device, in accordance with an example embodiment; and
Figure 4 is a flow chart illustrating the operations performed, such as by the apparatus of Figure 2 embodied by or in conjunction with a server or other network device, in accordance with an example embodiment.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

A method, apparatus and computer program product are provided in accordance with an example embodiment in order to determine whether radio models are maintained or otherwise accessible by a server or other network device that are sufficient to determine the location of a mobile device based upon radio signals received by the mobile device. The method, apparatus and computer program product make this determination as to the sufficiency of the radio models maintained or accessible to the server or other network device prior to consuming the bandwidth required to transmit information regarding the radio signals received by the mobile device and also prior to consuming the processing resources required to determine the location of the mobile device based upon a comparison of the information regarding the radio signals received by the mobile device and the radio models maintained by the server or other network device. As a result, in an instance in which the server or other network device does not include the necessary radio models to determine the location of a mobile device, such as during the construction of the radio models or during updating of radio models that have become outdated due to any of a variety of reasons including changes in the radio environment, such as the addition, removal or change in location of one or more access points, the method, apparatus and computer program product of an example embodiment avoid the unnecessary consumption of bandwidth and processing resources since the location of the mobile device would not be able to be determined, at least not with a sufficient confidence, in any event.

The method, apparatus and computer program product of an example embodiment are configured to efficiently determine the location of a mobile device by reliance upon on-line positioning services. In conjunction with on-line positioning services, radio models are maintained by or otherwise accessible to a server or other network device (hereinafter generically referenced as a server for proposes of explanation, but not of limitation). These radio models are generally constructed from fingerprint data, e.g., probe points, collected by a plurality of mobile devices that provide information regarding the radio signals received by the mobile devices at different locations.

Various types of radio models may be constructed including coverage models that indicate the access points that are anticipated to be detected by a mobile device at different locations. Other types of radio models, such as location models, e.g., radio propagation models, Rx field models, etc., provide information not only regarding the identity of the one or more access points from which a mobile device is anticipated to receive radio signals at different locations, but information regarding various characteristics of the radio signals that are anticipated to be received from the one or more access points at different locations, such as information regarding the signal strength, timing information or the like. Regardless of the type of radio models, the radio models may be stored by or otherwise accessible to the server.

In order to determine the location of the mobile device, the mobile device receives radio signals from one or more access points and provides information regarding the radio signals that have been received to the server such that the server can compare the information regarding the radio signals that have been received by the mobile device to radio signals anticipated to be received by a mobile device at different locations as defined by the radio models. The mobile device may receive radio signals from any of a variety of different types of access points. For example, the access points may include cellular base stations that transmit cellular signals and/or Wi-Fi access points, Bluetooth access points, ultra-wide band (UWB) access points, wireless local area network (WLAN) access points or the like that also transmit radio signals that may be received by the mobile device. Regardless of the type of access point, the access points transmit radio signals that may be received by a mobile device within a respective service area.

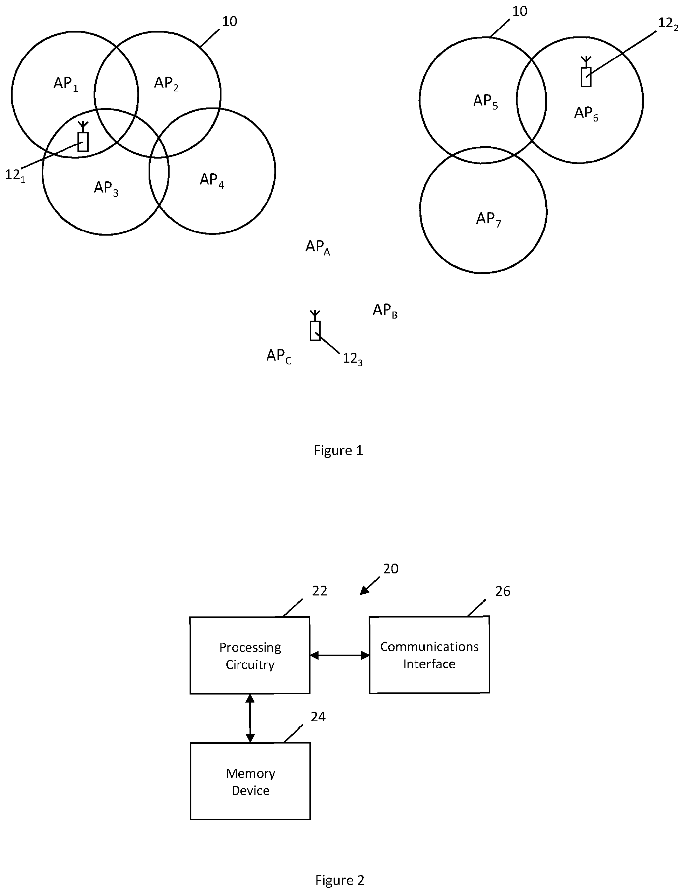

By way of example, Figure 1 depicts a plurality of access points designated AP₁, AP₂, ... AP₇ as well as AP_{A}, AP_{B} and APc. The service area 10 in which radio signals transmitted by a respective access point will be received by a mobile device are also illustrated in Figure 1 by circles centered about the respective access points. Although the service areas are shown to have a circular shape in Figure 1, the service areas may have any shape depending upon a variety of factors including the directionality with which an access point transmits the radio signals, the surrounding radio environment, the surrounding physical environment or the like. By way of example, a mobile device 12₁ is shown to receive radio signals from both access point AP₁ and access point AP₃. By way of another example, mobile device 12₂ is configured to receive radio signals from access point AP₆.

Each of the access points transmits radio signals that are capable of being received by a mobile device within a respective service area. In the example of Figure 1, radio models have been constructed and are available for those access points, namely, the access points designated AP₁, AP₂, . . . AP₇, that are depicted to have respective service areas 10 in Figure 1. However, the construction of radio models has not been completed or previous radio models are out-of-date for those access points in the example of Figure 1 that are not shown to have an associated service area. For example, corresponding service areas are not depicted for access points AP_{A}, AP_{B} and APc in Figure 1 such that the radio models of these access points have not yet been constructed or, if constructed, are out of date and have not yet been updated. Thus, the radio models for the respective access points designated AP_{A}, AP_{B}, and APc are not defined and cannot be relied upon in conjunction with the determination of the location of a mobile device. Thus, mobile device 12₃ will be unable to rely upon on-line positioning services to determine its location based upon radio signals received by the mobile device from the access points designated AP_{A}, AP_{B}, and APc since the server does not include or have access to radio models that have been constructed and/or updated for the access points in proximity to mobile device 12₃.

In accordance with an example embodiment, a method, apparatus and computer program product are configured to distinguish between instances in which radio models are maintained by or accessible to a server for the access points in proximity to a mobile device, such as mobile devices 12₁ and 12₂, such that on-line positioning services are available relative to instances in which radio models are not available for the access points in proximity to a mobile device, such as mobile device 12₃, such that on-line positioning services are not available. By determining the availability of on-line positioning services in advance, the method, apparatus and computer program product of an example embodiment determine the location of a mobile device utilizing on-line positioning services in an instance in which radio models are maintained by or accessible to a server for the access points in proximity to a mobile device, but avoid the unnecessary consumption of bandwidth and processing resources in an instance in which on-line positioning services will be unable to determine the location of the mobile device as a result of the unavailability of radio models for the access points in proximity to the mobile device.

An on-line positioning service relies upon cooperation and communication between a mobile device which submits a positioning request and a server which provides an indication of the location of the mobile device. Thus, the apparatus of one embodiment is defined to be embodied by or otherwise associated with a mobile device, such as a mobile terminal including, for example, a personal digital assistant (PDA), mobile telephone, smart phone, personal navigation device, smart watch, tablet computer, or any combination of the aforementioned and other types of portable computer devices. However, the apparatus of another embodiment is embodied by or associated with a server. Regardless of whether the apparatus is embodied by or associated with a mobile device or a server, the apparatus 20 may include, be associated with or in communication with processing circuitry 22, a memory device 24 and a communication interface 26 as shown in Figure 2.

In some embodiments, the processing circuitry 22 (and/or co-processors or any other processors assisting or otherwise associated with the processing circuitry) can be in communication with the memory 24 via a bus for passing information among components of the apparatus 20. The memory can be non-transitory and can include, for example, one or more volatile and/or non-volatile memories. In other words, for example, the memory may be an electronic storage device (for example, a computer readable storage medium) comprising gates configured to store data (for example, bits) that can be retrievable by a machine (for example, a computing device like the processing circuitry). The memory can be configured to store information, data, content, applications, instructions, or the like for enabling the apparatus to carry out various functions in accordance with an example embodiment of the present disclosure. For example, the memory can be configured to buffer input data for processing by the processing circuitry. Additionally or alternatively, the memory can be configured to store instructions for execution by the processing circuitry.

The processing circuitry 22 can be embodied in a number of different ways. For example, the processing circuitry may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry can include one or more processing cores configured to perform independently. A multi-core processor can enable multiprocessing within a single physical package. Additionally or alternatively, the processing circuitry can include one or more processors configured in tandem via the bus to enable independent execution of instructions, pipelining and/or multithreading.

In an example embodiment, the processing circuitry 22 can be configured to execute instructions stored in the memory 24 or otherwise accessible to the processing circuitry. Alternatively or additionally, the processing circuitry can be configured to execute hard coded functionality. As such, whether configured by hardware or software methods, or by a combination thereof, the processing circuitry can represent an entity (for example, physically embodied in circuitry) capable of performing operations according to an embodiment of the present disclosure while configured accordingly. Thus, for example, when the processing circuitry is embodied as an ASIC, FPGA or the like, the processing circuitry can be specifically configured hardware for conducting the operations described herein. Alternatively, as another example, when the processing circuitry is embodied as an executor of software instructions, the instructions can specifically configure the processing circuitry to perform the algorithms and/or operations described herein when the instructions are executed. However, in some cases, the processing circuitry can be a processor of a specific device (for example, a computing device) configured to employ an embodiment of the present disclosure by further configuration of the processor by instructions for performing the algorithms and/or operations described herein. The processing circuitry can include, among other things, a clock, an arithmetic logic unit (ALU) and/or one or more logic gates configured to support operation of the processing circuitry.

The apparatus 20 of an example embodiment can also include the communication interface 26. The communication interface can be any means such as a device or circuitry embodied in either hardware or a combination of hardware and software that is configured to receive and/or transmit data from/to other electronic devices in communication with the apparatus, such as by providing for communication between a mobile device and a server and/or between a mobile device and one or more access points. The communication interface can be configured to communicate in accordance with various wireless protocols including Global System for Mobile Communications (GSM), such as but not limited to Long Term Evolution (LTE). In this regard, the communication interface can include, for example, an antenna (or multiple antennas) and supporting hardware and/or software for enabling communications with a wireless communication network. In this regard, the communication interface can include, for example, an antenna (or multiple antennas) and supporting hardware and/or software for enabling communications with a wireless communication network. Additionally or alternatively, the communication interface can include the circuitry for interacting with the antenna(s) to cause transmission of signals via the antenna(s) or to handle receipt of signals received via the antenna(s). In some environments, the communication interface can alternatively or also support wired communication.

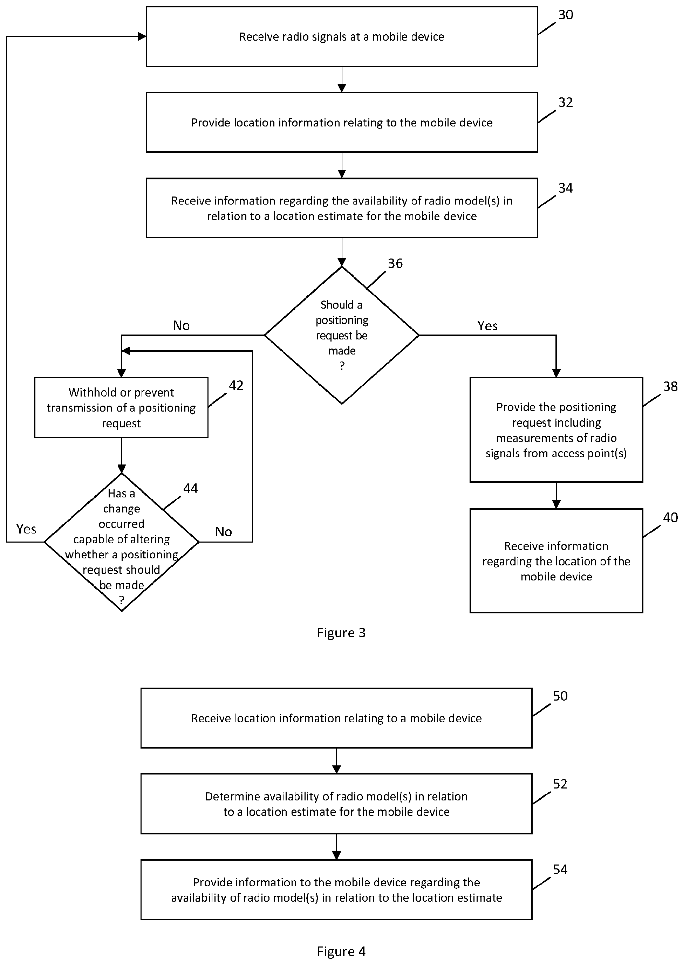

Referring to Figure 3, the operations performed, such as by the apparatus 20 of Figure 2 as embodied by or in association with a mobile device, are depicted. As shown in block 30, the apparatus includes means, such as the processing circuitry 22, the communication interface 26 or the like, for receiving radio signals from one or more access points. As noted above, the radio signals may be received from any of a variety of different types of access points including cellular base stations, Wi-Fi access points, Bluetooth access points, UWB access points, WLAN access points, etc. The radio signals that are received identify the access point that has transmitted the radio signals. The access point may be identified in various manners including, for example, by the global and/or local identifiers of a cellular base station or by a basic service set identifier (BSSID), service set identifier (SSID), media access control (MAC) address or other identifier of other types of access points. The radio signals that are received by a mobile device may also be defined by a plurality of characteristics including, for example, parameters defining the strength of the radio signals that are received, such as in terms of received signal strength, e.g., received signal strength index, physical Rx level and/or pathloss estimates, timing information associated with the radio signals that are received including, for example, Timing Advance or Round-Trip Time, and/or frequency bands.

In an instance in which the location of the mobile device is to be determined, such as in an instance in which an application executed by the mobile device is dependent upon the location of the mobile device, e.g., a mapping or navigation application or a social media application, the apparatus 20 includes means, such as the processing circuitry 22, the communication interface 26 or the like, for providing location information relating to the mobile device. See block 32 of Figure 3. The location information may be provided to the server or may be stored, such as by a database that is accessible to the server. The location information provided by the mobile device defines a coarse location of the mobile device that is less precise than the location to be provided by the on-line positioning service in an instance in which radio models for the access points from which the mobile device receives radio signals exist and are up to date. In addition, the location information provided by the mobile device to the server is generally less precise than that required by the various applications executed by the mobile device that are dependent upon location information. Thus, while the mobile device of an example embodiment is capable of providing location information to the server, this location information is generally not sufficient for all purposes and the mobile device is endeavoring to acquire more accurate and precise location information utilizing the on-line positioning service.

The apparatus 20, such as the processing circuitry 22, the communication interface 26 or the like, is configured to provide any of a variety of different types of location information indicative of a coarse location of the mobile device. The location information provided by the apparatus as embodied by the mobile device may be based upon the radio signals that have been received by the mobile device. For example, the location information provided by the mobile device may identify the access points for which radio signals have been received. As used herein, the identity of access points may be provided by providing identification information for respective access points or by providing a representation, such as a hash, of the identification information. Alternatively, the apparatus embodied by the mobile device, such as the processing circuitry, may have access to coverage models of the access points with such coverage models stored by the memory device 24 or by a database in communication with the apparatus such that the apparatus is capable of determining a coarse location for the mobile device based upon the coverage models. Notwithstanding the access to coverage models, the mobile device of this example embodiment may still rely upon on-line positioning services since more detailed radio models are stored and updated by the server in order to provide more precise location information. In this example embodiment, the apparatus, such as the processing circuitry, may be configured to determine a region in which the mobile device is located based upon the coverage models and the radio signals received by the mobile device such that the location information provided to the server is indicative of the region in which the mobile device is located. In another embodiment, the apparatus embodied by a mobile device is configured to provide location information in the form of a coarse location that has been provided by a positioning system, such as a global navigation satellite system (GNSS) positioning system or a cellular system.

Referring now to block 34, the apparatus 20 includes means, such as the processing circuitry 22, the communication interface 26 or the like, for receiving information regarding the availability of one or more radio models in relation to a location estimate for the mobile device. As such, the mobile device is able to determine based upon the information that is received whether radio models are available to the server from which the location of the mobile device may be determined with increased precision such that the mobile device should proceed to communicate with the server in an effort to determine the more precise location of the mobile device. Alternatively, the information provided by the server may indicate that radio models are not available or are not up to date in the region in which the mobile device is currently located, such as defined by the location information previously provided by the mobile device, such that the mobile device need not further engage the server to determine its location with more precision at this time since those further efforts would prove unsuccessful, thereby conserving bandwidth and/or processing resources that would otherwise be expended in an unsuccessful effort to obtain more precise position information. In this regard, although a limited amount of bandwidth and processing resources are consumed to provide and process the location information provided in block 32 by the mobile device, the bandwidth and processing resources that are consumed are appreciably less than those that would be consumed in an effort to obtain more precise position information in an instance in which radio models are not available or are not up to date in the region in which the mobile device is currently located.

The apparatus 20, such as the processing circuitry 22, the communication interface 26 or the like, may receive any of a variety of different types of information regarding the availability of one or more radio models based upon the location information previously provided to the server. For example, the apparatus, such as the processing circuitry, the communication interface or the like, may be configured to receive an indication from the server as to whether a positioning request, e.g., a positioning request for on-line positioning services, is able to be successfully made. Although a variety of different indications may be provided, the indication of an example embodiment may be a binary indication or a flag having a first state indicating that a positioning request is able to be successfully made and a second state indicating that a positioning request cannot be successfully made for a mobile device generally located as defined by the location information previously provided by the mobile device.

In another example embodiment, the information regarding the availability of the one or more radio models may include an indication of the number of radio models in proximity to the location estimate for the mobile device as defined by the location information previously provided by the mobile device. In this regard, a radio model may be considered to be in proximity to the location estimate for the mobile device in an instance in which the access point associated with a respective radio model is within a predefined distance of the location estimate for the mobile device. Additionally or alternatively, a radio model may be considered to be in proximity to the location estimate of the mobile device in an instance in which the service area 10 defined by the radio model of a respective access point encompasses all or a portion of the location estimate for the mobile device. The indication of the number of radio models may be an absolute number, such as in terms of the absolute number of radio models in proximity to the location estimate of the mobile device. Alternatively, the indication of the number of radio models in proximity to the location estimate for the mobile device may be a relative number of radio models. In this regard, the relative number of radio models may be a ratio of the number of radio models in proximity to the location estimate for the mobile device for which radio models have been constructed and are up to date relative to the total number of access points in proximity to the location estimate for the mobile device.

In yet another example embodiment, the information regarding the availability of one or more radio models may include identification information for the one or more radio models that are available as a result of being in proximity to the location estimate for the mobile device. In this regard, the access points for which radio models have been constructed and are up to date that are in proximity to the location estimate for the mobile device may be identified. The identification information may identify respective access points in any of a variety of manners, including, for example by BSSID, SSID, MAC address or the like. As used herein, the identification information may be the identifier associated with a respective access point or a hash or other compressed representation of the identifier associated with a respective access point with the hash or other compressed representation of the identifier serving to conserve bandwidth otherwise utilized in conjunction with the transmission of an uncompressed representation of the identifier. In instances in which radio models have been constructed and are up-to-date for a plurality of access points that are in proximity to the location estimate for the mobile device, the identification information may separately identify each access point or the identification information may alternatively be in the form of a data structure, such as provided by a Bloom filter, that combines and compresses the identifiers for all of the access points that are proximate the location estimate for the mobile device and for which radio models have been constructed. In an embodiment in which the identification information provides for the combined identification of a plurality of access points, the identification information can be further used by a mobile device to identify the access points for which radio models have potentially been constructed, and can also identify the access points that definitely do not have a radio model constructed therefore. By combining and compressing the identifiers for a plurality of access points, the identification information of this example embodiment further reduces the data that is transmitted from the server to the mobile device, thereby further conserving the bandwidth.

As shown in decision block 36 of Figure 3, the apparatus 20 also includes means, such as the processing circuitry 22 or the like, for determining whether a positioning request is to be made based upon the information regarding the availability of one or more radio models. This determination is dependent upon the information that is provided regarding the availability of the one or more radio models and, as such, varies depending upon the type of information that is provided. In an instance in which an indication is provided regarding the availability of the one or more radio models, the apparatus, such as the processing circuitry, is configured to determine whether a positioning request is to be made based upon the indication. In this regard, the apparatus, such as the processing circuitry, is configured to determine that a positioning request should be made in an instance in which the indication indicates that a positioning request is able to be successfully made. However, in an instance in which the indication indicates that the positioning request is not able to be successfully made, the apparatus, such as the processing circuitry, is configured to correspondingly determine that a positioning request should not be made.

Alternatively, in an instance in which the information regarding the availability of the one or more radio models includes an indication of a number of radio models in proximity to the location estimate for the mobile device, the apparatus 20, such as the processing circuitry 22, is configured to determine whether a positioning request is to be made based upon the number of radio models in proximity to the location estimate for the mobile device. In this regard, a predetermined threshold may be defined and the apparatus, such as the processing circuitry, may be configured to determine whether a positioning request is to be made based upon the relationship of the number of radio models in proximity to the location estimate for the mobile device to the predetermined threshold. For example, in an instance in which the number of radio models in proximity to the location estimate for the mobile device equals or exceeds the predetermined threshold, the apparatus, such as the processing circuitry, may be configured to determine that a processing request is to be made. Conversely, in an instance in which the number of radio models in proximity to the location estimate for the mobile device is less than the predetermined threshold, the apparatus, such as the processing circuitry, may be configured to determine that a processing request should not be made. Different predetermined thresholds may be predetermined for an absolute number of radio models in proximity to the location estimate for the mobile device and a relative number of radio models in proximity to the location estimate for the mobile device.

Further, in an instance in which the information regarding the availability of the one or more radio models includes identification information for the one or more radio models that are available as a result of being in proximity to the location estimate for the mobile device, the apparatus 20, such as the processing circuitry 22, is configured to determine whether a positioning request is to be made based upon a comparison of the identification information to the access points that were identified to have transmitted radio signals received by the mobile device. In some embodiments, the apparatus, such as the processing circuity, is configured to determine that a positioning request is to be made in an instance in which the identification information confirms that radio models are available for all of the access points that were identified to have transmitted radio signals received by the mobile device. In this embodiment, the apparatus, such as the processing circuitry, therefore determines that a positioning request is not to be made in an instance in which the identification information indicates that radio models are not available for one or more of the access points that were identified to have transmitted radio signals received by the mobile device.

In other embodiments, the apparatus 20, such as the processing circuitry 22, does not require that radio models be available for all of the access points that were identified to have transmitted radio signals received by the mobile device, but, instead, at least a predefined number or a predefined percentage of the access points that were identified to have transmitted radio signals received by the mobile device. In this example embodiment, the apparatus, such as the processing circuitry, is configured to determine that a positioning request is to be made in an instance in which the identification information confirms that radio models are available for at least the predefined number and/or predefined percentage of the access points that were identified to have transmitted radio signals received by the mobile device. In this embodiment, the apparatus, such as the processing circuitry, therefore determines that a positioning request is not to be made in an instance in which the identification information indicates that radio models are not available for at least the predefined number and/or predefined percentage of the access points that were identified to have transmitted radio signals received by the mobile device.

In an instance in which a determination is made that the positioning request is to be made, the apparatus 20 includes means, such as the processing circuitry 22, the communication interface 26 or the like, for providing the positioning request including information regarding measurements of radio signals from one or more access points to the server. See block 38 of Figure 3. The information regarding measurements of radio signals from one or more access points may include a variety of information including information identifying the one or more access points and information regarding various characteristics of the measurements of the radio signals including, for example, the signal strength of the radio signals and/or timing information regarding the radio signals. In an embodiment in which the identification information identifies one or more specific access points that are proximate the location estimate for the mobile device and for which radio models have been constructed and are up-to-date, the positioning request may be constructed so as to include information relating only to those access points identified by the identification information. As such, bandwidth and/or processing resources may be conserved by not including information in the positioning request that relates to other access point(s), such as access points for which radio models have not been constructed or are not up-to-date.

Based upon the information regarding the measurements of the radio signals from one or more access points that is provided to the server, the apparatus 20 also includes means, such as the processing circuitry 22, the communication interface 26 or the like, for receiving information, such as is from the server, regarding the location of the mobile device. See block 40. Based upon this information regarding the location of the mobile device, the location of the mobile device may be defined with increased precision such that one or more applications executed by the mobile device that are at least partially dependent upon the location of the mobile device may rely upon this more precise location of the mobile device as defined by the information that is received from the server.

However, in an instance in which the apparatus 20, such as the processing circuitry 22, determines that a positioning request is not to be made, such an in an instance in which an insufficient number of radio models have been constructed and/or updated in proximity to the location estimate for the mobile device to allow the location of the mobile device to be defined with the desired precision, the apparatus includes means, such as the processing circuitry or the like, for withholding or preventing transmission of the positioning request. See block 42. By withholding or preventing transmission at the positioning request in an instance in which the server has been determined to be unable to determine the location of the mobile device with the desired precision, the method, apparatus and computer program product of an example embodiment avoid the consumption of the bandwidth and power by the mobile device otherwise required to transmit the information regarding measurements of the radio signals from one or more access points from the mobile device to the server and/or avoid consumption of the processing resources by the server in an effort that will likely prove unsuccessful to determine the location of the mobile device with increased precision.

In this instance in which the transmission of a positioning request is withheld or prevented, the apparatus 20 of an example embodiment also includes means, such as the processing circuitry 22 or the like, for determining whether a change has occurred that is capable of altering the determination as to whether the positioning request is to be made. See decision block 44 of Figure 3. Any of a variety of different changes may be identified that are capable of altering the determination as to whether the positioning request is to be made. For example, the change may relate to the passage of time such that the apparatus, such as the processing circuitry, determines that a change has occurred that is capable of altering whether a positioning request should be made in an instance in which location information relating to the mobile device has not been provided to the server for at least a predefined amount of time. As another example, a change that may have occurred that is capable of altering the determination as to whether a positioning request is to be made may be movement of the mobile device by at least a predetermined distance since the prior provision of location information relating to the mobile device to the server. In a further example, a change that may have occurred that is capable of altering the determination as to whether a positioning request is to be made may be a change in the radio environment, such as the addition, removal or change in location of one or more access points in proximity to the mobile device.

In an instance in which the apparatus 20, such as the processing circuitry 22, determines that a change has not occurred that is capable of altering whether a positioning request should be made, the apparatus, such as the processing circuitry, continues to withhold or prevent transmission of a positioning request to the server. Alternatively, in an instance in which a change has occurred that is capable of altering the determination as to whether a positioning request is to be made, the apparatus, such as the processing circuitry, is configured to again capture radio signals from one or more access points as shown in block 30 and to provide location information relating to the mobile device, such as the information regarding a coarse location of the mobile device, to the server as shown in block 32 to permit the server to again determine the availability of one or more radio models in relation to a location estimate for the mobile device.

Referring now to Figure 4, the operations performed, such as by the apparatus 20 as depicted in Figure 2 and embodied by or associated with a server, are depicted. In this regard, the server is configured to be responsive to the location information provided by the mobile device in order to determine and provide information to the mobile device regarding the availability of one or more radio models in relation to the location estimate for the mobile device. As shown in block 50 of Figure 4, the apparatus embodied by or otherwise associated with the server includes means, such as the processing circuitry 22, the communication interface 26 or the like, for receiving location information relating the mobile device. The location information defines a location estimate for the mobile device. The location estimate may be a course location estimate as described above. However, the location estimate may have other levels of detail and, in some embodiments, may be a fine or precise location estimate that was previously provided.

Based upon the location information relating to the mobile device which defines a location estimate for the mobile device, the apparatus 20 embodied by or associated with the server, includes means, such as the processing circuitry 22 or the like, for determining the availability of one or more radio models in relation to the location estimate for the mobile device. See block 52 of Figure 4. As described above in relation to the operations of the mobile device, the availability of one or more radio models in relation to the location estimate for the mobile device may be determined in various manners. For example, the apparatus embodied by the server, such as the processing circuitry, may be configured to determine whether a processing request for on-line positioning services will be able to be successfully made by the mobile device at its current location based upon the availability of one or more radio models in relation to the location estimate for the mobile device.

Additionally or alternatively, the determination of the availability of one or more radio models in relation to the location estimate for the mobile device may be provided by the apparatus 20, such as the processing circuitry 22, being configured to determine the number of radio models, such as the absolute number of radio models or the relative number of radio models, in proximity to the location estimate for the mobile device. Still further, the apparatus, such as the processing circuitry, of an example embodiment may be configured to determine the availability of one or more radio models in relation to the location estimate for the mobile device by identifying the one or more radio models in proximity to the location estimate for the mobile device. In this regard, the one or more radio models in proximity to the location estimate for the mobile device may be identified by corresponding identification information that serves to identify the access point associated with each respective radio model.

As shown in block 54 of Figure 4, the apparatus 20 of this example embodiment also includes means, such as the processing circuitry 22, the communication interface 26 or the like, for providing information to the mobile device regarding the availability of the one or more radio models in relation to the location estimate for the mobile device. The information that is provided to the mobile device is dependent upon the manner in which the availability of one or radio models in relation to the location estimate for the mobile device is determined. In an instance in which a determination is made as to whether a positioning request is able to be successfully made based upon the availability of one or more radio models in relation to the location estimate for the mobile device, the apparatus, such as the processing circuitry, the communication interface or the like, may be configured to provide an indication, such as a binary indication, a flag or the like, as to whether the positioning request is able to be successfully made.

Additionally or alternatively, in an instance in which the number of radio models in proximity to the location estimate for the mobile device is determined in conjunction with the determination of the availability of one or more radio models in relation to the location estimate for the mobile device, the apparatus 20, such as the processing circuitry 22, the communication interface 26 or the like, may be configured to provide an indication of the number of radio models, such as the absolute number or relative number, in proximity to the location estimate for the mobile device. Still further, in an instance in which the apparatus, such as the processing circuitry, determines the availability of one or more radio models in relation to a location estimate for the mobile device by identifying the respective radio models, the apparatus, such as the processing circuitry, communication interface 26 or the like, is configured to provide identification information to the mobile device defining the one or more access points for which radio models are available in relation to the location estimate for the mobile device.

Based upon the information regarding the availability of one or more radio models in relation to the location estimate for the mobile device, a mobile device may then determine whether to provide a positioning request to the server soliciting a more precise location for the mobile device. As discussed above in relation to Figure 3, a positioning request may be made in those instances in which one or more radio models are available from which to determine the location of the mobile device and not in those instances in which one or more radio models have not been constructed and/or are not up to date in relation to the location estimate for the mobile device. In response to receiving a positioning request, the apparatus 20 embodied by the server, such as the processing circuitry 22, is configured to provide information defining a more precise location of the mobile device based upon reference to the one or more radio models for access points in proximity to the mobile device. However, bandwidth otherwise consumed by a positioning request from a mobile device, power consumed by a client device for a positioning request and processing resources otherwise expended by the server in response to the positioning request may be conserved in instances in which the server would eventually be unable to determine the location of the mobile device with increased precision as a result of the lack of sufficient radio models in proximity to the mobile device.

As described above, Figures 3 and 4 are flowcharts of an apparatus 20, method, and computer program product configured to enable selective positioning requests according to an example embodiment. It will be understood that each block of the flowcharts, and combinations of blocks in the flowcharts, may be implemented by various means, such as hardware, firmware, processing circuitry 22, and/or other devices associated with execution of software including one or more computer program instructions. For example, one or more of the procedures described above may be embodied by computer program instructions. In this regard, the computer program instructions which embody the procedures described above may be stored by the memory 24 of the apparatus and executed by the processing circuitry or the like. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

## Claims

1. A method for enabling selective positioning requests, the method comprising:
receiving (50) location information relating to a mobile device, wherein the location information comprises a coarse location estimate for the mobile device;
determining (52), by processing circuitry (22), availability of one or more radio models in relation to the coarse location estimate for the mobile device based upon the location information, the one or more radio models being maintained by or accessible to a server or other network device for on-line positioning services in order to provide a more precise location of the mobile device;
determining, based upon the availability of one or more radio models in relation to the location estimate for the mobile device, whether a positioning request is able to be successfully made such that a more precise location of the mobile device can be determined by the on-line positioning services; and
providing (54) information to the mobile device regarding the availability of the one or more radio models in relation to the coarse location estimate, wherein providing information comprises providing an indication as to whether the positioning request is able to be successfully made such that a more precise location of the mobile device can be determined by the on-line positioning services.

2. A method according to Claim 1, wherein the location information comprises location information provided by a positioning system or a cellular system.

3. A method according to Claim 1 or 2, wherein determining the availability of one or more radio models in relation to the location estimate for the mobile device comprises determining the one or more radio models in proximity to the location estimate for the mobile device, and wherein providing information regarding the availability of the one or more radio models comprises providing identification information for the one or more radio models in proximity to the location estimate for the mobile device.

4. A method according to any of Claims 1-3, wherein determining the availability of one or more radio models in relation to the location estimate for the mobile device comprises determining a number of radio models in proximity to the location estimate for the mobile device, and wherein providing information regarding the availability of the one or more radio models comprises providing an indication of the number of radio models in proximity to the location estimate for the mobile device.

5. An apparatus configured to enable selective positioning requests, the apparatus comprising means for performing a method of any of the claims 1-4.

6. A method for selective provision of positioning requests, the method comprising:
providing (32) location information relating to a mobile device, wherein the location information comprises a coarse location estimate for the mobile device;
receiving (34) information regarding an availability of one or more radio models in relation to the coarse location estimate for the mobile device based upon the location information, the one or more radio models being maintained by or accessible to a server or other network device for on-line positioning services in order to provide a more precise location of the mobile device, wherein receiving information comprises receiving an indication as to whether the positioning request is able to be successfully made such that a more precise location of the mobile device can be determined by the on-line positioning services; and
determining (36), by processing circuitry (22), whether a positioning request is to be made based upon the information regarding the availability of the one or more radio models in order to obtain a more precise location of the mobile device, wherein determining whether the positioning request is to be made comprises determining whether the positioning request is to be made based upon the indication.

7. A method according to Claim 6, further comprising providing, in an instance in which a determination is made that the positioning request is to be made, the positioning request including information regarding measurements of radio signals from one or more access points.

8. A method according to Claim 7, further comprising, in an instance in which a determination is made that the positioning request is not to be made, withholding or preventing transmission of the positioning request.

9. A method according to any of Claims 6-8, wherein receiving information regarding the availability of the one or more radio models comprises receiving identification information for the one or more radio models that are available as a result of being in proximity to the location estimate for the mobile device, and wherein determining whether the positioning request is to be made comprises determining whether the positioning request is to be made based upon the one or more access points from which radio signals are received in relation to the one or more radio models for which identification information is received.

10. A method according to any of Claims 6-9, wherein receiving information regarding the availability of the one or more radio models comprises receiving an indication of a number of radio models in proximity to the location estimate for the mobile device, and wherein determining whether the positioning request is to be made comprises determining whether the number of radio models satisfies a predefined threshold.

11. A method according to Claim 6, further comprising:
in an instance in which a determination is made that the positioning request is not to be made, determining whether a change has occurred that is capable of altering the determination as to whether the positioning request is to be made; and
in an instance in which the change has occurred that is capable of altering the determination as to whether the positioning request is to be made, again providing location information relating to the mobile device.

12. An apparatus configured to selectively provide positioning requests, the apparatus comprising means for performing a method of any of the claims 6-11.

## Patentansprüche

1. Verfahren zum Ermöglichen von selektiven Positionierungsanfragen, wobei das Verfahren Folgendes umfasst:
Empfangen (50) von Standortinformationen in Bezug auf eine mobile Vorrichtung, wobei die Standortinformationen eine grobe Standortschätzung für die mobile Vorrichtung umfassen;
Bestimmen (52) durch Verarbeitungsschaltungen (22) von Verfügbarkeit von einem oder mehreren Funkmodellen in Bezug auf die grobe Standortschätzung für die mobile Vorrichtung basierend auf den Standortinformationen, wobei das eine oder die mehreren Funkmodelle von einem Server oder einer anderen Netzwerkvorrichtung für Online-Positionierungsdienste verwaltet werden oder für diese zugänglich sind, um einen genaueren Standort der mobilen Vorrichtung bereitzustellen;
Bestimmen, basierend auf der Verfügbarkeit von einem oder mehreren Funkmodellen in Bezug auf die Standortschätzung für die mobile Vorrichtung, ob eine Positionierungsanfrage erfolgreich gestellt werden kann, sodass durch die Online-Positionierungsdienste ein genauerer Standort der mobilen Vorrichtung ermittelt werden kann; und
Bereitstellen (54) von Informationen an die mobile Vorrichtung hinsichtlich der Verfügbarkeit des einen oder der mehreren Funkmodelle in Bezug auf die grobe Standortbestimmung, wobei Bereitstellen von Informationen Bereitstellen einer Anzeige darüber umfasst, ob die Positionierungsanfrage erfolgreich gestellt werden kann, sodass durch die Online-Positionierungsdienste ein genauerer Standort der mobilen Vorrichtung ermittelt werden kann.

2. Verfahren nach Anspruch 1, wobei die Standortinformationen Standortinformationen umfassen, die von einem Positionierungssystem oder einem Mobilfunksystem bereitgestellt werden.

3. Verfahren nach Anspruch 1 oder 2, wobei Bestimmen der Verfügbarkeit von einem oder mehreren Funkmodellen in Bezug auf die Standortschätzung für die mobile Vorrichtung Bestimmen des einen oder der mehreren Funkmodelle in der Nähe der Standortschätzung für die mobile Vorrichtung umfasst, und wobei Bereitstellen von Informationen hinsichtlich der Verfügbarkeit des einen oder der mehreren Funkmodelle Bereitstellen von Identifikationsinformationen für das eine oder die mehreren Funkmodelle in der Nähe der Standortschätzung für die mobile Vorrichtung umfasst.

4. Verfahren nach einem der Ansprüche 1-3, wobei Bestimmen der Verfügbarkeit von einem oder mehreren Funkmodellen in Bezug auf die Standortschätzung für die mobile Vorrichtung Bestimmen einer Anzahl von Funkmodellen in der Nähe der Standortschätzung für die mobile Vorrichtung umfasst, und wobei Bereitstellen von Informationen hinsichtlich der Verfügbarkeit des einen oder der mehreren Funkmodelle Bereitstellen einer Anzeige der Anzahl der Funkmodelle in der Nähe der Standortschätzung für die mobile Vorrichtung umfasst.

5. Einrichtung, die so konfiguriert ist, dass sie selektive Positionierungsanfragen ermöglicht, wobei die Einrichtung Mittel zum Durchführen eines Verfahrens nach einem der Ansprüche 1-4 umfasst.

6. Verfahren zur selektiven Bereitstellung von Positionierungsanfragen, wobei das Verfahren Folgendes umfasst:
Bereitstellen (32) von Standortinformationen in Bezug auf eine mobile Vorrichtung, wobei die Standortinformationen eine grobe Standortschätzung für die mobile Vorrichtung umfassen;
Empfangen (34) von Informationen hinsichtlich einer Verfügbarkeit von einem oder mehreren Funkmodellen in Bezug auf die grobe Standortbestimmung für die mobile Vorrichtung auf Grundlage der Standortinformationen, wobei die ein oder mehreren Funkmodelle von einem Server oder einem anderen Netzwerkvorrichtung für Online-Positionierungsdienste verwaltet oder zugänglich gemacht werden, um einen genaueren Standort der mobilen Vorrichtung zu ermöglichen, wobei Empfangen von Informationen Empfangen einer Anzeige darüber umfasst, ob die Positionsanfrage erfolgreich gestellt werden kann, sodass durch die Online-Positionierungsdienste ein genauerer Standort der mobilen Vorrichtung ermittelt werden kann; und
Bestimmen (36) durch Verarbeitungsschaltungen (22), ob basierend auf den Informationen hinsichtlich der Verfügbarkeit des einen oder der mehreren Funkmodelle eine Positionierungsanfrage gestellt werden soll, um einen genaueren Standort der mobilen Vorrichtung zu erhalten, wobei Ermitteln, ob eine Positionierungsanfrage gestellt werden soll, Bestimmen umfasst, ob die Positionierungsanfrage basierend auf der Anzeige gestellt werden soll.

7. Verfahren nach Anspruch 6, weiter umfassend Bereitstellen, in einem Fall, in dem eine Bestimmung getroffen wird, dass die Positionierungsanfrage gestellt werden soll, der Positionierungsanfrage, die Informationen hinsichtlich Messungen von Funksignalen von einem oder mehreren Zugangspunkten einschließt.

8. Verfahren nach Anspruch 7, weiter umfassend, in einem Fall, in dem ein Bestimmung getroffen wird, dass die Positionierungsanfrage nicht gestellt werden soll, Zurückhalten oder Verhindern von Übermittlung der Positionierungsanfrage.

9. Verfahren nach einem der Ansprüche 6-8, wobei Empfangen von Informationen hinsichtlich der Verfügbarkeit des einen oder der mehreren Funkmodelle Empfangen von Identifikationsinformationen für das eine oder die mehreren verfügbaren Funkmodelle umfasst, die verfügbar sind, als Ergebnis davon, dass sie sich in der Nähe des geschätzten Standorts für die mobile Vorrichtung befinden, und wobei Bestimmen, ob die Positionierungsanfrage gestellt werden soll, Bestimmen umfasst, ob die Positionierungsanfrage basierend auf dem einen oder den mehreren Zugangspunkten gestellt werden soll, von denen Funksignale in Bezug auf das eine oder die mehreren Funkmodelle empfangen werden, für die Identifikationsinformationen empfangen werden.

10. Verfahren nach einem der Ansprüche 6-9, wobei Empfangen von Informationen hinsichtlich der Verfügbarkeit des einen oder der mehreren Funkmodelle Empfangen einer Anzeige einer Anzahl von Funkmodellen in der Nähe des geschätzten Standorts für die mobile Vorrichtung umfasst, und wobei Bestimmen, ob die Positionierungsanfrage gestellt werden soll, Bestimmen umfasst, ob die Anzahl von Funkmodellen einen vordefinierten Schwellenwert erfüllt.

11. Verfahren nach Anspruch 6, weiter umfassend:
in einem Fall, in dem eine Bestimmung getroffen wird, dass die Positionierungsanfrage nicht gestellt werden soll, Bestimmen, ob eine Änderung eingetreten ist, die die Bestimmung darüber, ob die Positionierungsanfragegestellt werden soll, verändert; und
in einem Fall, in dem die Änderung eingetreten ist, die die Bestimmung darüber verändert, ob eine Positionierungsanfrage gestellt werden soll, erneutes Bereitstellen von Standortinformationen in Bezug auf die mobile Vorrichtung.

12. Einrichtung, die so konfiguriert ist, dass sie selektiv Positionierungsanfragen bereitstellt, wobei die Einrichtung Mittel zum Durchführen eines Verfahrens nach einem der Ansprüche 6-11 umfasst.

## Revendications

1. Procédé permettant des requêtes de positionnement sélectif, le procédé comprenant :
la réception (50) d'informations de localisation relatives à un appareil mobile, dans laquelle les informations de localisation comprennent une estimation grossière de localisation de l'appareil mobile ;
la détermination (52), par un circuit de traitement (22), de la disponibilité d'un ou plusieurs modèles radio par rapport à l'estimation grossière de localisation de l'appareil mobile basée sur les informations de localisation, les un ou plusieurs modèles radio étant maintenus par ou accessibles à un serveur ou à un autre dispositif réseau pour des services de positionnement en ligne afin de fournir une localisation plus précise de l'appareil mobile ;
la détermination, sur la base de la disponibilité d'un ou plusieurs modèles radio par rapport à l'estimation de localisation de l'appareil mobile, si une requête de positionnement peut être effectuée avec succès de sorte qu'une localisation plus précise de l'appareil mobile puisse être déterminée par les services de positionnement en ligne ; et
la fourniture (54) d'informations à l'appareil mobile concernant la disponibilité des un ou plusieurs modèles radio par rapport à l'estimation grossière de localisation, dans lequel la fourniture d'informations comprend une fourniture d'une indication quant à savoir si la requête de positionnement peut être effectuée avec succès de sorte qu'une localisation plus précise de l'appareil mobile puisse être déterminée par les services de positionnement en ligne.

2. Procédé selon la revendication 1, dans lequel les informations de localisation comprennent des informations de localisation fournies par un système de positionnement ou un système cellulaire.

3. Procédé selon la revendication 1 ou la revendication 2, dans lequel la détermination de la disponibilité d'un ou plusieurs modèles radio par rapport à l'estimation de localisation de l'appareil mobile comprend une détermination des un ou plusieurs modèles radio à proximité de l'estimation de localisation de l'appareil mobile, et dans lequel la fourniture d'informations concernant la disponibilité des un ou plusieurs modèles radio comprend une fourniture d'informations d'identification pour les un ou plusieurs modèles radio à proximité de l'estimation de localisation de l'appareil mobile.

4. Procédé selon l'une quelconque des revendications 1 à 3, dans lequel la détermination de la disponibilité d'un ou plusieurs modèles radio par rapport à l'estimation de localisation de l'appareil mobile comprend une détermination d'un nombre de modèles radio à proximité de l'estimation de localisation de l'appareil mobile, et dans lequel la fourniture d'informations concernant la disponibilité des un ou plusieurs modèles radio comprend une fourniture d'une indication du nombre de modèles radio à proximité de l'estimation de localisation de l'appareil mobile.

5. Appareil configuré pour permettre des requêtes de positionnement sélectif, l'appareil comprenant des moyens pour effectuer un procédé selon l'une quelconque des revendications 1-4.

6. Procédé de fourniture sélective de requêtes de positionnement, le procédé comprenant :
la fourniture (32) d'informations de localisation relatives à un appareil mobile, dans lequel les informations de localisation comprennent une estimation grossière de localisation de l'appareil mobile ;
la réception (34) d'informations concernant la disponibilité d'un ou plusieurs modèles radio par rapport à l'estimation grossière de localisation de l'appareil mobile basée sur les informations de localisation, les un ou plusieurs modèles radio étant maintenus par ou accessibles à un serveur ou à un autre dispositif réseau pour des services de positionnement en ligne afin de fournir une localisation plus précise de l'appareil mobile, dans lequel la réception d'informations comprenant une réception d'une indication quant à la possibilité d'effectuer avec succès la requête de positionnement, de sorte qu'une localisation plus précise de l'appareil mobile puisse être déterminée par les services de positionnement en ligne ; et
la détermination (36), par un circuit de traitement (22), si une requête de positionnement doit être effectuée sur la base des informations concernant la disponibilité des un ou plusieurs modèles radio afin d'obtenir une localisation plus précise de l'appareil mobile, dans lequel la détermination de si la requête de positionnement doit être effectuée comprend une détermination si la requête de positionnement doit être effectuée sur la base de l'indication.

7. Procédé selon la revendication 6, comprenant en outre une fourniture, dans un cas où il est déterminé que la requête de positionnement doit être effectuée, de la requête de positionnement incluant des informations concernant des mesures de signaux radio provenant d'un ou plusieurs points d'accès.

8. Procédé selon la revendication 7, comprenant en outre, dans un cas où il est déterminé que la requête de positionnement ne doit pas être effectuée, le fait de retenir ou d'empêcher une transmission de la requête de positionnement.

9. Procédé selon l'une quelconque des revendications 6-8, dans lequel la réception d'informations concernant la disponibilité des un ou plusieurs modèles radio comprend une réception d'informations d'identification pour les un ou plusieurs modèles radio qui sont disponibles du fait de leur proximité avec l'estimation de localisation de l'appareil mobile, et dans lequel la détermination si la requête de positionnement doit être effectuée comprend la détermination si la requête de positionnement doit être effectuée sur la base des un ou plusieurs points d'accès à partir desquels des signaux radio sont reçus par rapport aux un ou plusieurs modèles radio pour lesquels des informations d'identification sont reçues.

10. Procédé selon l'une quelconque des revendications 6-9, dans lequel la réception d'informations concernant la disponibilité des un ou plusieurs modèles radio comprend une réception d'une indication d'un nombre de modèles radio à proximité de l'estimation de localisation de l'appareil mobile, et dans lequel la détermination si la requête de positionnement doit être effectuée comprend une détermination si le nombre de modèles radio satisfait un seuil prédéfini.

11. Procédé selon la revendication 6, comprenant en outre :
dans un cas où il est déterminé de ne pas effectuer la requête de positionnement, la détermination si un changement est survenu qui est apte à modifier la détermination si la requête de positionnement doit être effectuée ; et
dans un cas où un changement est survenu qui est apte à modifier la détermination si la requête de positionnement doit être effectuée, la fourniture renouvelée d'informations de localisation relatives à l'appareil mobile.

12. Appareil configuré pour fournir sélectivement des requêtes de positionnement, l'appareil comprenant des moyens pour effectuer un procédé selon l'une quelconque des revendications 6-11.
